# EUROPÄISCHE PATENTSCHRIFT

(11) **EP 2 049 773 B1**
(45) Veröffentlichungstag und Bekanntmachung des Hinweises auf die Patenterteilung: **24.10.2012**
(21) Anmeldenummer: 07787817.1
(22) Anmeldetag: 23.07.2007
(51) Int. Cl.: F01K 23/06, F25J 3/02, F25J 3/04

(54) **VERFAHREN UND VORRICHTUNG ZUR GEWINNUNG VON EDELGASEN**
METHOD AND DEVICE FOR OBTAINING INERT GAS
PROCÉDÉ ET DISPOSITIF D'OBTENTION DE GAZ RARES

(30) Priorität: 05.08.2006 DE 102006036749
(43) Veröffentlichungstag der Anmeldung: 22.04.2009
(73) Patentinhaber: Messer Group GmbH, 65812 Bad Soden (DE)
(72) Erfinder: HERZOG, Friedhelm, 47803 Krefeld (DE); ROHOVEC, Joachim, 2500 Baden bei Wien (DE)
(74) Vertreter: Münzel, Joachim R.
(86) Internationale Anmeldenummer: PCT/EP2007/057574
(87) Internationale Veröffentlichungsnummer: WO 2008/017583

(56) Entgegenhaltungen:
- EP-A- 1 327 843
- WO-A-02/095309
- DD-A1- 84 628
- DE-A1- 4 139 678
- US-A- 5 787 730

## Beschreibung

Die Erfindung betrifft ein Verfahren zur Gewinnung von Edelgasen, bei dem ein Luftgaskomponenten enthaltender Gasstrom in einer Luftzerlegungsanlage einem Verfahren zur Zerlegung in seine Bestandteile unterworfen wird, wobei neben Stickstoff und Sauerstoff wenigstens ein Edelgas gewonnen wird.

Sauerstoff, Stickstoff, Argon und die meisten anderen Edelgase können durch Zerlegung von Luft gewonnen werden. So können z.B. in einer modernen Luftzerlegungsanlage, in der ca. 200 000 m3/h Luft durchgesetzt werden, neben ca.160 000 m³ Stickstoff und 38 000 m³ Sauerstoff auch etwa 1800 m³ Argon, 3 m³ Neon, 1 m³ Helium, 0,2m³ Krypton und 0,016 m³ Xenon gewonnen werden.

Diese Verfahren haben sich bewährt und kommen heute überall auf der Welt großtechnisch zum Einsatz. Unbefriedigend ist jedoch, dass die Ausbeute an Edelgasen bei der traditionellen Zerlegung von Luft nur gering ist. Zumindest bei der Erzeugung von Helium behilft man sich daher damit, anstelle von Luft ein heliumreiches Erdgas einem Zerlegungsverfahren zu unterziehen. Dieses Verfahren ist wirtschaftlicher als die Erzeugung von Luft, ist aber nur in Regionen einsetzbar, in denen entsprechendes Erdgas zur Verfügung steht.

Aufgabe der vorliegenden Erfindung ist daher, die Effizienz und Ausbeute bei der Gewinnung von Edelgasen mittels Gaszerlegung zu verbessern.

Gelöst ist diese Aufgabe bei einem Verfahren der eingangs erwähnten Art dadurch, dass der Gasstrom vor seiner Zuführung an die Luftzerlegungsanlage mit einem edelgashaltigen Teilgasstrom durchmischt wird.

Durch die Anreicherung des Luftgase enthaltenden Gasstroms mit einem edelgasreichen Teilstrom wird der Edelgasanteil im Gasstrom gegenüber demjenigen normaler Luft deutlich erhöht. Dadurch können Trennverfahren für Edelgase erheblich wirtschaftlicher eingesetzt werden, als dies bei der üblichen Luftzerlegung der Fall ist. Von großer wirtschaftlicher Bedeutung ist das erfindungsgemäße Verfahren insbesondere dann, wenn Verfahrensabläufe, bei denen edelgasreiche Prozessgasströme oder edelgasreiche Naturgase wie Erdgas oder Grubengas anfallen, mit einer am Standort oder auch entfernt davon aufgestellten Luftzerlegungsanlage kombiniert werden. In diesen Fallen kann das erfindungsgemäße Verfahren den Einbau zusätzlicher Edelgas-Trenneinrichtungen in der Luftzerlegungsanlage erstmals wirtschaftlich rechtfertigen, da die Ausbeute an Edelgasen und damit deren wirtschaftliche Verwertung wesentlich gesteigert werden kann.

Bevorzugt wird der Teilgastrom zum Beladen mit Edelgas mit einem erhitzen, edelgashaltigen Stoff in Kontakt gebracht, wobei das Edelgas zumindest teilweise abgetrennt und mit dem Teilgasstrom abgeführt wird. Als edelgashaltiger Stoff kommt dabei jeder Stoff in Betracht, in dem Edelgase wie Helium, Neon, Argon, Krypton oder Xenon adsorbiert, gelöst oder eingemischt sind und vom Stoff getrennt werden können. Der Stoff wird auf eine Temperatur gebracht, in der zumindest ein Teil des Edelgases abgetrennt und vom Teilgasstrom abgeführt wird. Durch diese Behandlung wird auch die Reinheit und Qualität des behandelten Stoffes verbessert, zumal durch die Erhitzung neben dem Edelgas häufig weitere gasförmige Stoffe, beispielsweise Wasserdampf oder Kohlendioxid abgetrennt und vom Teilgasstrom abgeführt werden. Der mit dem Edelgas beladene Teilgasstrom wird anschließend dem Gasstrom zur Gaszerlegung zugeführt, um die Edelgase zu gewinnen. Zur Gaszerlegung kann auch eine bereits vorhandene Luftzerlegungsanlage eingesetzt werden. Befindet sich eine geeignete, also mit entsprechenden Edelgas-Trenneinrichtungen ausgerüstete Luftzerlegungsanlage nicht vor Ort, sondern räumlich entfernt von dem Ort, an dem die Beladung des Teilgasstroms erfolgt, kann der Teilgasstrom auch in Behälter abgefüllt und zur Luftzerlegungsanlage transportiert werden, wo er in den Eingangsluftstrom der Luftzerlegungsanlage eingespeist wird. Der Eingangsluftstrom der Luftzerlegungsanlage wird so mit Edelgasen angereichert und die Ausbeute an Edelgasen gegenüber der Zerlegung reiner Luft somit erhöht.

Vorzugsweise wird dem Teilgasstrom vor seiner Beladung in der Gaszerlegungseinrichtung gewonnenes Luftgas, insbesondere Stickstoff, Sauerstoff, Argon oder ein diese enthaltendes Gasgemisch, zugemischt. Das Gas wird in dieser Ausgestaltung also zumindest teilweise im Kreislauf geführt und in der Gaszerlegungseinrichtung gewonnenes Luftgas als Teilgasstrom zur Beladung eingesetzt.

Vorzugsweise handelt es sich bei dem edelgashaltigen Stoff um einen natürlichen oder künstlichen Rohstoff. Natürliche Materialien wie Kohle, Erz, Erdöl, Erdgas oder Grubengas enthalten in nicht unbeträchtlichem Umfang verschiedene Edelgase, insbesondere Helium oder Argon. Neben Edelgasen enthalten diese Materialien im Übrigen häufig auch andere Gasbestandteile, die nutzbringend eingesetzt werden können und deren Entfernung darüber hinaus den behandelten Rohstoff veredelt. Beispielsweise erhöht die Abtrennung von im Rohstoff angereichertem Sauerstoff die Effizienz der Sauerstofferzeugung im Rahmen der Gastrennung und verbessert darüber hinaus den Brennwert des Stoffes, falls dieser als Brennstoff eingesetzt werden soll. Jedoch kann das erfindungsgemäße Verfahren auch zur Gewinnung von Edelgasen aus Abfallstoffen oder Zwischen- oder Endprodukten in industriellen Prozessen eingesetzt werden. So kann beispielsweise ein Prozessgas bei der Wärmebehandlung von Metallen oder anderen Stoffen mit Edelgasen angereichert werden und im Folgenden als Teilgasstrom im Sinne der vorliegenden Erfindung eingesetzt werden.

Um in großem Umfange Synergien zwischen verschiedenen Bereichen der Technik nutzen zu können, wird in einer anderen Ausführungsform der Erfindung als edelgashaltiger Stoff ein Brennstoff eingesetzt und beim Verfahren zum Zerlegen des Gasstromes abgetrennter Sauerstoff zumindest teilweise einer Brennkammer zur Verbrennung des Brennstoffs zugeführt. Da bei der Erhitzung des Brennstoffes neben Edelgasen auch andere im Brennstoff enthaltene Stoffe abgetrennt werden, die für den Verbrennungsvorgang nachteilig sind, insbesondere Wasser, wird der Brennwert des Brennstoffs zudem erhöht.

Eine andere vorteilhafte Ausgestaltung der Erfindung sieht vor, dass der Teilgasstrom ein edelgashaltiges Prozessgas enthält. Als Prozessgas kann dabei beispielsweise ein Gas dienen, das im Verlauf eines Prozesses mit Edelgasen beladen wurde oder um ein ursprünglich reines Edelgas, das im Verlauf eines Prozesses mit weiteren Stoffen beladen wurde. Im letzteren Falle erweist sich die Erfindung gegenüber dem Einsatz üblicher Reinigungsverfahren für das eingesetzte Edelgas zumindest dann als überlegen, wenn das Edelgas im weiteren Prozessverlauf in erheblichem Maße durch Luftgas oder sonstige Gase verdünnt wird. Ebenso ist es im Rahmen der Erfindung vorstellbar, das Abgas aus einem Verbrennungsprozess als Teilgasstrom einzusetzen oder diesem zuzuführen. Insbesondere bei der Verbrennung fossiler Brennstoffe wie Kohle, Erdöl, Erdgas oder Grubengas fallen in erheblichem Umfang Edelgase an. Zwar ist die Zerlegung von Abgasen aus der Verbrennung von Brennstoffen mit Luft zum Zwecke der Darstellung von Argon bereits aus der EP 0 469 781 A2 bekannt, dieses Verfahren scheitert jedoch beim Einsatz von Sauerstoff als Oxidationsmittel, da das Abgas in diesem Falle fast ausschließlich aus Kohlendioxid besteht. Durch die erfindungsgemäße Zuführung des Abgases als Teilstrom an den einer Gaszerlegung zugeführten Gasstrom kann jedoch eine wirtschaftlich sinnvolle Ausbeute an Edelgas erzielt werden.

Die erfindungsgemäße Aufgabe wird auch durch eine Vorrichtung zur Gewinnung von Edelgasen gelöst, mit einer Luftzerlegungsanlage, die eine Gaszuführung zum Zuführen eines zu zerlegenden, Luft enthaltenden Gasstroms sowie wenigstens eine Einrichtung zum Gewinnen von Edelgasen aus dem zerlegten Gasstrom aufweist, und die dadurch gekennzeichnet ist, dass der Luftzerlegungsanlage eine Einrichtung zur Abtrennung von Edelgasen aus einem edelgashaltigen Stoff und zur Beladung eines Teilgasstroms mit dem abgetrennten Edelgas sowie eine Einrichtung zum Zuführen des Teilgasstroms an die Gaszuführung der Luftzerlegungsanlage zugeordnet ist.

Vorteilhafterweise ist der Einrichtung zur Abtrennung der Edelgase dabei eine Einrichtung zur Verbrennung des Stoffs, von dem das Edelgas abgetrennt wurde, nachgeschaltet. Bei dem die Edelgase enthaltenden Stoff handelt es sich in diesem Fall also um einen Brennstoff, bevorzugt einen fossilen Energieträger wie Kohle, Erdöl, Erdgas oder Grubengas. Besonders vorteilhaft ist dabei, die Einrichtung zur Verbrennung des Stoffes in ein Kraftwerk zur Erzeugung von Wärme und/oder Strom zu integrieren. Der von der Luftzerlegungsanlage angesaugte Luftstrom oder der in der Luftzerlegungsanlage erzeugte Stickstoffstrom kann in diesem Fall ganz oder teilweise dazu genutzt werden, um den Brennstoff vor seiner Verbrennung einem Prozess zur Abtrennung gasförmiger Bestandteile zu unterwerfen und in ihm enthaltene gas- oder dampfförmige Bestandteile, insbesondere Edelgase und andere Bestandteile, wie Wasserdampf, zu entfernen. Durch den Trennprozess wird zum einen der Gasstrom mit Edelgasen angereichert, die Ausbeute an Edelgasen im Luftzerlegungsprozess also erhöht, und zum anderen der Brennwert des Brennstoffes verbessert.

Anhand der Zeichnung sollen Ausführungsbeispiele der Erfindung näher erläutert werden. In schematischen Ansichten zeigen:
Fig. 1: Eine erfindungsgemäße Vorrichtung in einer ersten Ausführungsform,
Fig. 2 : Eine erfindungsgemäße Vorrichtung in einer Variante zum in Fig. 1 gezeigten Ausführungsbeispiel und
Fig. 3: Eine erfindungsgemäße Vorrichtung in einer anderen Ausführungsform.

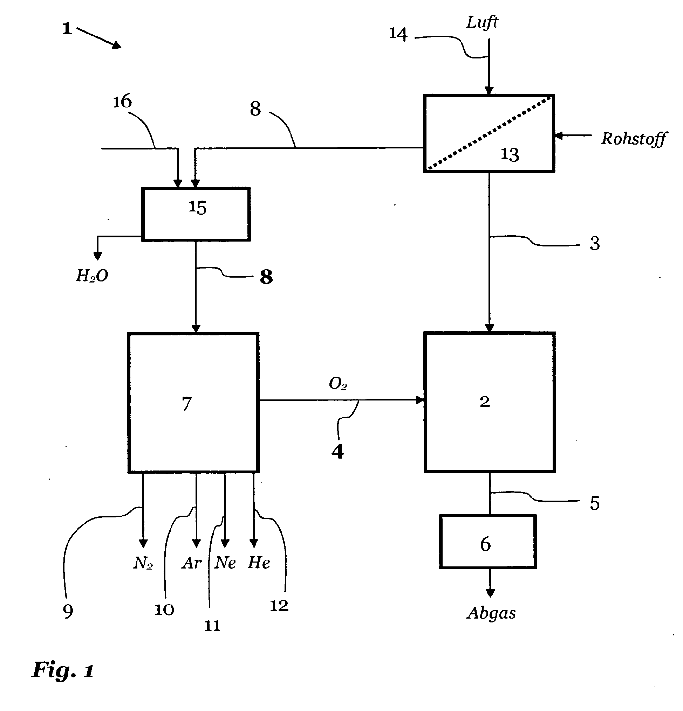

Die in der Fig. 1 gezeigte und in ihrer Gesamtheit mit dem Bezugszeichen 1 bezeichnete Anlage umfasst eine Verbrennungsanlage 2, beispielsweise ein Kraftwerk, das durch Verbrennung eines fossilen Energieträgers, beispielsweise Kohle, Erdöl oder Erdgas, Grubengas oder mit Müll beheizt wird. Der Brennstoff wird über eine Brennstoffzuführung 3 herangeführt. Über eine Oxidationsmittelleitung 4 wird ein Oxidationsmittel, im Ausführungsbeispiel Sauerstoff oder ein sauerstoffreiches Gas, herangeführt. Das bei der Verbrennung entstehende Abgas wird über eine Abgasleitung 5 abgeführt. Um die Emission von Treibhausgasen zu verringern, kann das bei der Verbrennung entstehende Kohlendioxid in einer Trenneinrichtung 6 vom übrigen Abgas in üblicher Weise abgetrennt und entsorgt bzw. weiterverwendet werden.

Das zur Verbrennung erforderliche Oxidationsmittel, im Ausführungsbeispiel Sauerstoff, wird in einer Luftzerlegungsanlage 7 gewonnen. In der Luftzerlegungsanlage 7 wird ein Rohgas, das über eine Rohgasleitung 8 herangeführt wird, in an sich bekannter Weise in seine Bestandteile zerlegt, die anschließend über entsprechende Produktleitungen 4, 9,10,11 für Stickstoff (9), Sauerstoff (4), Argon (10), Neon (11), Helium (12) und gegebenenfalls Leitungen für weitere im Rohgas enthaltene Edelgase wie Krypton oder Xenon abgeführt werden.

Der Brennstoffzuführung 3 ist eine Einrichtung zur Abtrennung gasförmiger Bestandteile vorgeschaltet. Im Ausführungsbeispiel handelt es sich dabei um eine Desorptionseinrichtung 13 zur Abtrennung von gasförmigen Bestandteilen aus einem festen Brennstoff, wie Kohle. Im Rahmen der Erfindung kann anstelle der Desorptionseinrichtung 13 jedoch auch eine andere Trenneinrichtung zum Entfernen von Edelgasen und anderen gas- oder dampfförmigen Bestandteilen aus festen, flüssigen oder gasförmigen Brennstoffen zum Einsatz kommen. In der Desorptionseinrichtung 13 wird der Brennstoff vor seiner Zuführung an die Verbrennungseinrichtung 2 erhitzt und mit einem Desorptionsgas beaufschlagt, welches über eine Desorptionsleitung 14 herangeführt wird. Im Ausführungsbeispiel nach Fig. 1 wird als Desorptionsgas Luft eingesetzt. Durch das Erhitzen des Brennstoffes desorbiert das im Brennstoff enthaltene Edelgas, ebenso wie Sauerstoff und Wasser, und wird von einem Teilgasstrom des Desorptionsgases mitgerissen. Zum Erhitzen des Brennstoffs wird entweder dieser selbst vor seiner Zuführung an die Desorptionseinrichtung 13 erhitzt, oder das zur Desorption eingesetzte Gas, im Ausführungsbeispiel Luft, wird erhitzt. Als Energie zum Beheizen kann beispielsweise beim Betrieb der Luftzerlegungsanlage 7 oder des Kraftwerks 2 anfallende Restwärme genutzt werden. Beispielsweise kann in hier nicht gezeigter Weise die Eigenwärme des Abgases über einen geeigneten Wärmetauscher zum Beheizen des Brennstoffs und/oder des Desorptionsgases eingesetzt werden.

Der mit den desorbierten Stoffen angereicherte Teilgasstrom durchmischt sich mit den Teilströmen des Desorptionsgases, in dem kein oder nur in geringem Umfang Stoffe desorbiert wurden und bildet so einen homogenen, mit Edelgasen und anderen Stoffen beladenen Gasstrom, der in der Rohgasleitung 8 abgeführt wird oder, entsprechend einer anderen, hier nicht gezeigten Ausführungsform, in Behälter abgefüllt und zur Luftzerlegungsanlage 7 transportiert wird. Für den Fall, dass der beladene Gasstrom in erheblichem Umfang leicht entzündliche Teilbestandteile enthält, empfiehlt es sich, den Gasstrom mit Frischluft zu verdünnen, bis die Zündgrenze unterschritten ist. Das gleiche gilt auch, wenn neben dem Edelgas in größeren Mengen Sauerstoff oder Stickstoff gewonnen werden sollen, beispielsweise Sauerstoff für den Verbrennungsprozess in der Verbrennungsanlage 2. Die hierfür erforderliche Frischluft wird über eine Frischluftzuleitung 16 herangeführt. In der Rohgasleitung 8 ist in an sich üblicher Weise eine Vorreinigungsstufe 15 integriert, in dem desorbiertes Wasser sowie weitere desorbierte Bestandteile, wie beispielsweise Schadstoffe, Stäube, etc. vom übrigen Desorptionsgas abgetrennt werden. Das getrocknete Rohgas wird über die Rohgasleitung 8 der Luftzerlegungsanlage 7 zur Gastrennung zugeführt. Da das in die Luftzerlegungsanlage 7 eingebrachte Rohgas aufgrund des Desorptionsprozesses einen höheren Edelgasanteil als gewöhnliche Luft aufweist, können in der Luftzerlegungsanlage 7 erheblich größere Mengen an Edelgasen gewonnen werden. Zudem ist der Sauerstoffanteil aufgrund des Desorptionsprozesses erhöht, wodurch ein - im Vergleich zu Luft - deutlich höherer Anteil des Rohgases als Oxidationsmittel über die Oxidationsmittelleitung 4 der Verbrennungsanlage 2 zugeführt werden kann. Anstelle von Luft kann im Übrigen als Desorptionsgas auch ein anderes Gas eingesetzt werden, beispielsweise ein Prozessgas, das in einem anderen Prozess im Umfeld der Gesamtanlage 1 anfällt.

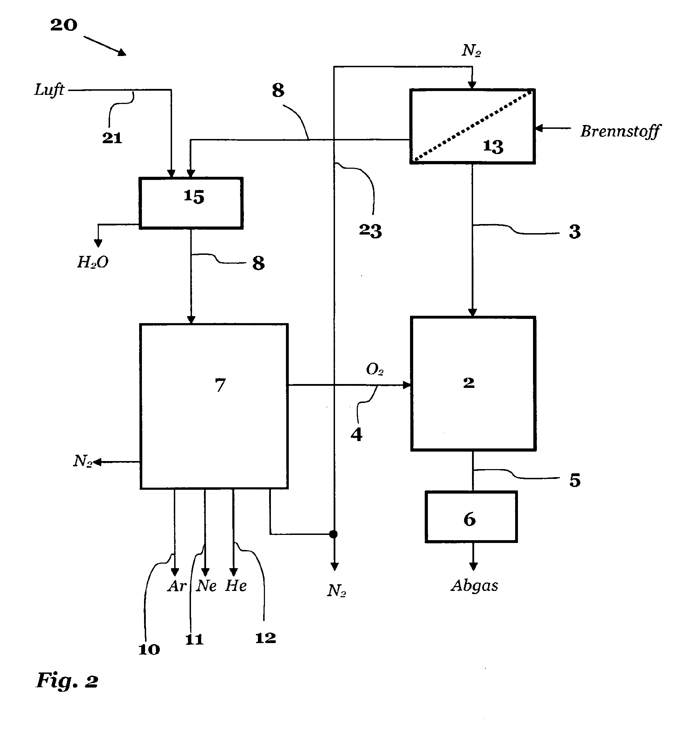

In Fig. 2 ist eine Variante zum vorgenannten Ausführungsbeispiel gezeigt. Dabei sind gleichwirkende Teile der Anlage mit gleichen Bezugsziffern wie in Fig. 1 bezeichnet. Bei der in Fig. 2 gezeigten Anlage 20 wird als Desorptionsgas Stickstoff eingesetzt, der zuvor in der Luftzerlegungsanlage 7 gewonnen wurde. Dazu wird zunächst Luft über eine Luftzuleitung 21 der Vorreinigungsstufe 15 und anschließend der Luftzerlegungsanlage 7 zugeführt und dort in ihre Bestandteile zerlegt. Der Sauerstoff wird, wie im vorherigen Ausführungsbeispiel, der Verbrennungsanlage 2 zugeführt. Der bei der Zerlegung gewonnene Stickstoff wird zumindest teilweise über eine Desorptionsgasleitung 23 zur Desorptionseinrichtung 13 geführt. Nach dem Desorptionsvorgang und der Trocknung und Reinigung in der Vorreinigungsstufe 15 wird der mit Edelgasen beladene Stickstoff der in der Luftzuleitung 21 herangeführten Luft beigemischt. Das in der Luftzerlegungsanlage 7 in seine Bestandteile zerlegte Gas weist einen höheren Gehalt an Edelgasen als normale Luft auf.

Eine andere, nicht gezeigte Variante der Ausführungsbeispiele nach Fig. 1 und 2 sieht vor, das Abgas aus der Verbrennungsanlage 2 nach der Abtrennung des Kohlendioxids in der Trenneinrichtung 6 ganz oder teilweise dem zur Zerlegung bestimmten Rohgas beizumischen. Dadurch werden beim Verbrennungsvorgang freiwerdende Edelgasanteile ebenfalls dem Prozess der Gaszerlegung unterworfen. Zudem kann die Eigenwärme des Abgases zur Erhitzung des Brennstoffs genutzt werden.

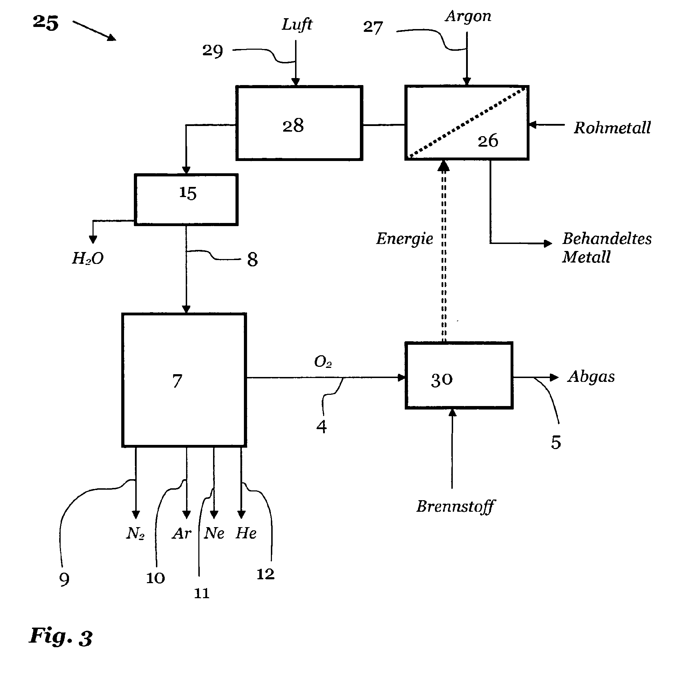

Auch in dem in Fig.3 gezeigten Ausführungsbeispiel werden gleichwirkende Teile der Anlage mit gleichen Bezugsziffern wie in Fig. 1 und Fig. Bezeichnet. Bei der in Fig. 3 gezeigten Anlage 25 wird ein Edelgas, im Beispiel Argon, zur Desorption von Stoffen aus einem zu behandelnden Metall in einem Wärmebehandlungsofen 26 eingesetzt. Das Reinargon wird dabei über eine Leitung 27 in den Wärmebehandlungsofen 26 eingeführt und anschließend in weiteren Prozessstufen 28 mit Luft oder Luftgasen, die entweder in den Prozessstufen 28 erzeugt oder über eine Leitung 29 herangeführt wird, verdünnt. Das auf diese Weise über die Rohgasleitung 8 herangeführte Gasgemisch dient als Rohstoff für die Luftzerlegungsanlage 7, wobei die während der Wärmebehandlung aufgenommenen Stoffe in der Vorreinigungsstufe 15 der Luftzerlegungsanlage 7 vom Rohgasstrom abgetrennt werden. Das bei der Luftzerlegung im Luftzerleger 7 gewonnene Argon kann anschließend wieder in die Leitung 27 eingespeist werden. Der bei der Luftzerlegung gewonnene Sauerstoff kann beispielsweise über die Oxidationsmittelleitung 4 einer Brennkammer 30 zugeführt werden, in der die für die Wärmebehandlung im Wärmebehandlungsofen 26 erforderliche Energie in Form von Wärme oder Strom erzeugt wird. In einer anderen Ausgestaltung gemäß Fig. 3 wird als Prozessgas ein ursprünglich edelgasfreies Gas eingesetzt das im Laufe der Materialbehandlung im Wärmebehandlungsofen 26 mit Edelgas beladen wird und anschließend als Teilgasstrom den Prozessstufen 28 oder direkt der Luftzerlegungsanlage 7 zugeführt.

Die Erfindung ist freilich nicht auf die angegebene Ausführungsbeispiele beschränkt. Das erfindungsgemäße Verfahren eignet sich zum Einsatz bei allen Prozessen, bei denen die Desorption von Edelgas aus einem Edelgas enthaltenen Rohstoff und die anschließende Abtrennung in einer Gaszerlegungseinrichtung wirtschaftlich sinnvoll zu realisieren ist.

### Bezugszeichenliste

- 1.: Anlage
- 2.: Verbrennungsanlage
- 3.: Brennstoffzuführung
- 4.: Oxidationsmittelleitung
- 5.: Abgasleitung
- 6.: Trenneinrichtung (für Kohlendioxid)
- 7.: Luftzerlegungsanlage
- 8.: Rohgasleitung
- 9.: Produktleitung für Stickstoff
- 10.: Produktleitung für Argon
- 11.: Produktleitung für Neon
- 12.: Produktleitung für Helium
- 13.: Desorptionseinrichtung
- 14.: Desorptionsgasleitung
- 15.: Vorreinigungsstufe
- 16.: Frischluftzuleitung
- 17.: -
- 18.: -
- 19.: -
- 20.: Anlage
- 21.: Luftzuleitung
- 22.: -
- 23.: Desorptionsgasleitung
- 24.: -
- 25.: Anlage
- 26.: Wärmebehandlungsofen
- 27.: Leitung
- 28.: Prozessstufen
- 29.: Leitung
- 30.: Brennkammer

## Patentansprüche

1. Verfahren zur Gewinnung von Edelgasen, bei dem ein Luftgaskomponenten enthaltender Gasstrom in einer Luftzerlegungsanlage (7) einem Verfahren zur Zerlegung in seine Bestandteile unterworfen wird, wobei neben Stickstoff und Sauerstoff wenigstens ein Edelgas gewonnen wird,
**dadurch gekennzeichnet,**
**dass** der Gasstrom vor seiner Zuführung an die Luftzerlegungsanlage (7) mit einem edelgasreichen Teilgasstrom durchmischt wird.

2. Verfahren nach Anspruch 1, **dadurch gekennzeichnet, dass** der Teilgastrom zum Beladen mit Edelgas mit einem erhitzen, edelgashaltigen Stoff in Kontakt gebracht wird, wobei das Edelgas zumindest teilweise abgetrennt und mit dem Teilgasstrom abgeführt wird.

3. Verfahren nach Anspruch 2, **dadurch gekennzeichnet, dass** dem Teilgasstrom vor seiner Beladung in der Luftzerlegungsanlage (7) gewonnenes Luftgas zugemischt wird.

4. Verfahren nach Anspruch 2 oder 3, **dadurch gekennzeichnet, dass** als edelgashaltiger Stoff ein natürlicher oder künstlicher Rohstoff, wie Kohle, Erz, Erdöl, Erdgas, Grubengas oder End- oder Zwischenprodukte aus industriellen Prozessen, zum Einsatz kommt.

5. Verfahren nach einem der Ansprüche 2 bis 4, **dadurch gekennzeichnet, dass** als edelgashaltiger Stoff ein Brennstoff eingesetzt wird, und bei dem Verfahren zum Zerlegen des Gasstroms entstehender Sauerstoff zumindest teilweise einer Brennkammer (2,30) zur Verbrennung des Brennstoffs zugeführt wird.

6. Verfahren nach einem der vorhergehenden Ansprüche, **dadurch gekennzeichnet, dass** der Teilgasstrom ein edelgashaltiges Prozessgas enthält.

7. Verfahren nach einem der vorhergehenden Ansprüche, **dadurch gekennzeichnet, dass** Abgas aus einem Verbrennungsprozess als Teilgasstrom eingesetzt oder diesem zugeführt wird

8. Vorrichtung zur Gewinnung von Edelgasen, mit einer Luftzerlegungsanlage (7), die eine Gaszuführung zum Zuführen eines zu zerlegenden, Luft enthaltenden Gasstroms sowie wenigstens eine Einrichtung (10,11,12) zum Gewinnen von Edelgasen aus dem zerlegten Gasstrom aufweist,
**dadurch gekennzeichnet,**
**dass** der Luftzerlegungsanlage (7) eine Einrichtung (14) zur Abtrennung von Edelgasen aus einem edelgashaltigen Stoff und zur Beladung eines Teilgasstroms mit dem abgetrennten Edelgas sowie eine Einrichtung zum Zuführen des Teilgasstroms an die Gaszuführung der Luftzerlegungsanlage (7) zugeordnet ist.

9. Vorrichtung nach Anspruch 8, **dadurch gekennzeichnet, dass** der Einrichtung (14) zur Abtrennung der Edelgase eine Einrichtung (2) zur Verbrennung des entladenen Stoffs nachgeschaltet ist.

## Claims

1. Method for obtaining noble gases, in which method a gas stream containing atmospheric gas components is subjected in an air fractionation system (7) to a process for fractionation into its components, wherein at least one noble gas is obtained in addition to nitrogen and oxygen,
**characterized**
**in that** the gas stream, before being fed to the air fractionation system (7), is mixed with a noble-gas-rich gas substream.

2. Method according to Claim 1, **characterized in that** the gas substream is placed in contact with a heated noble-gas-containing substance to load the gas substream with noble gas, wherein the noble gas is at least partially separated off and conducted away with the gas substream.

3. Method according to Claim 2, **characterized in that** atmospheric gas obtained in the air fractionation system (7) is admixed to the gas substream before the latter is loaded.

4. Method according to Claim 2 or 3, **characterized in that** a natural or artificial raw substance such as coal, ore, mineral oil, mineral gas, mine gas or end or intermediate products from industrial processes is used as a noble-gas-containing substance.

5. Method according to one of Claims 2 to 4, **characterized in that** a fuel is used as noble-gas-containing substance, and oxygen generated in the method for fractionation of the gas stream is supplied at least partially to a combustion chamber (2, 30) for the combustion of the fuel.

6. Method according to one of the preceding claims, **characterized in that** the gas substream comprises a noble-gas-containing process gas.

7. Method according to one of the preceding claims, **characterized in that** exhaust gas from a combustion process is used as, or is supplied to, the gas substream.

8. Apparatus for obtaining noble gases, having an air fractionation system (7) which has a gas supply for supplying an air-containing gas stream to be fractionated, and which has at least one device (10, 11, 12) for obtaining noble gases from the fractionated gas stream,
**characterized**
**in that** the air fractionation system (7) is assigned a device (14) for separating off noble gases from a noble-gas-containing substance and for the loading of a gas substream with the separated-off noble gas, and a device for supplying the gas substream to the gas supply of the air fractionation system (7).

9. Apparatus according to Claim 8, **characterized in that** device (2) for the combustion of the unloaded substance is positioned downstream of the device (14) for separating off the noble gases.

## Revendications

1. Procédé de récupération de gaz rares, lors duquel on soumet un flux gazeux contenant des composants du gaz d'air dans une installation de décomposition de l'air (7) à un procédé de décomposition dans ses composants, hormis de l'azote et de l'oxygène, au moins un gaz rare étant récupéré,
**caractérisé en ce**
**qu'**avant son alimentation dans l'installation de décomposition de l'air (7), on mélange intimement le flux gazeux à un flux gazeux partiel riche en gaz rare.

2. Procédé selon la revendication 1, **caractérisé en ce que** pour le charger en gaz rare, on amène le flux gazeux partiel en contact avec une substance réchauffée, contenant du gaz rare, le gaz rare étant au moins en partie séparé et évacué avec le flux gazeux partiel.

3. Procédé selon la revendication 2, **caractérisé en ce qu'**avant son chargement dans l'installation de décomposition de l'air (7), on mélange au flux gazeux partiel du gaz d'air récupéré.

4. Procédé selon la revendication 2 ou la revendication 3, **caractérisé en ce qu'**on utilise en tant que substance contenant du gaz rare une matière première naturelle ou synthétique, telle que du charbon, un minerai, du pétrole, du gaz naturel, du grisou ou des produits finaux ou des produits intermédiaires de processus industriels.

5. Procédé selon l'une quelconque des revendications 2 à 4, **caractérisé en ce qu'**on utilise en tant que substance contenant du gaz rare un combustible et **en ce qu'**on alimente l'oxygène résultant du procédé de décomposition du flux gazeux au moins en partie vers une chambre de combustion (2, 30) pour la combustion du combustible.

6. Procédé selon l'une quelconque des revendications précédentes, **caractérisé en ce que** le flux gazeux partiel contient un gaz de processus contenant du gaz rare.

7. Procédé selon l'une quelconque des revendications précédentes, **caractérisé en ce que** du gaz perdu d'un processus de combustion est utilisé en tant que flux gazeux partiel ou alimenté dans ce dernier.

8. Dispositif de récupération de gaz rares, avec une installation de décomposition de l'air (7), qui comporte une alimentation de gaz, pour alimenter un flux gazeux à décomposer contenant de l'air, ainsi qu'au moins un dispositif (10, 11, 12) de récupération de gaz rares,
**caractérisé en ce**
**qu'**il est associé à l'installation de décomposition de l'air (7) un dispositif (14) pour séparer des gaz rares d'une substance contenant du gaz rare et pour charger un flux gazeux partiel avec le gaz rare séparé, ainsi qu'un dispositif pour alimenter le flux gazeux partiel vers l'alimentation de gaz de l'installation de décomposition de l'air (7).

9. Dispositif selon la revendication 8, **caractérisé en ce qu'**un dispositif (2) de combustion de la substance déchargée est monté en aval du dispositif (14) de séparation de gaz rare.
